# EUROPEAN PATENT APPLICATION

(11) **EP 2 275 332 A1**
(43) Date of publication of application: **19.01.2011**
(21) Application number: 09165681.9
(22) Date of filing: 16.07.2009
(51) Int. Cl.: B62J 9/00, B62J 7/08

(54) **Bag adaptor**

(71) Applicant: HAMAX AS, 1526 Moss (NO)
(72) Inventor: Forsell, Roy, 1739 Borgenhaugen (NO)
(74) Representative: Meissner, Bolte & Partner

(57) **Abstract**

A bag adapter plate (10) for a bike carrier (1) of a bike (2), comprising a plate like member (11) extending in a first direction between a forward (12) and rearward (13) ends of the adapter plate (10). A first slot (14) is provided extending along the first direction and having a front end (15) and a rear end (16), the first slot (14) for receiving a first attachment means (31) of a carrier bag (30). A holding portion (17) for receiving a second attachment means (32) of the carrier bag (30) is also provided, the holding portion (17) being separate from the first slot (14) and positioned at a location which is between the rear end (16) of the first slot (14) and the rearward end (13) of the plate (10).
A carrier bag (30) is also provided for interaction with a bag adapter plate (10), in particular the bag adapter plate (10) as defined above, wherein the carrier bag (30) is comprised of a first (31) and a second (32) attachment means.

## Description

### Background to the Invention

The present disclosure relates generally to a carrier for use with a cycle, motorcycle or moped. The use of such bike carriers is well known in the art, in particular as a means of transporting luggage, or the like, without the rider of the bike having to carry this. In the following disclosure the term "bike" will be used, although it is clear that this can be substituted for a bicycle, moped, motorcycle or even tricycle. Additionally, the terms "cycle carrier" and "bike carrier" will be used interchangeably to relate to a carrier suitable for any of the above bikes.

A range of accessories is available for many bike carriers, with these appropriately interfacing with the carrier for attachment to the bike. One particular such accessory is that of a child's seat. In order to be able to cycle with a small child, a child's seat can be interfaced to the cycle carrier; a variety of different ways of achieving this are known, with the child's seat securely holding the child for peace of mind during travelling.

One particularly well known style of child's seat is one in which the seat extends downwards on either side of the seating portion, and provides foot wells or supports for the child's feet. Typically, these foot holding portions extend downward either side of the cycle carrier, and often to the same height as the wheel of the bike over which the cycle carrier is positioned. Such a design is well known, and can be seen from at least EP 0 583 013.

As well as being able to carry a child's seat, it is often the case that the bike rider will also want to carry bags attached to the carrier. Typically, these bags are attached to the carrier such that they hang down by the side of the wheel, as is well known for panniers. It will be appreciated that the use of both a child's seat with foot rests and a side mounting bag leads to problems with space, as the foot rest would tend to interfere with the location of the bag. As has been seen in EP 1 712 457, this can be overcome by use of a bag in which at least the top front corner is collapsible, so as to allow the foot rest of the child's seat into the defined recess. This is particularly advantageous, as it allows for most of the cycle bag to be made from a rigid material, in order to protect the bag contents, whilst also allowing such a cycle bag to be integrated on a carrier with an attached child seat.

As will be appreciated, if the child's seat is attached to the carrier, this will generally interfere with the attachment of the carrier bag. In other words, the foot rests overlap with the region on the bike carrier which comprises the fixing mechanism for attachment of the bag. In this situation, the user of the cycle carrier must often remove the child's seat in order to mount and remove the side mounted bag. This can be trying enough, but is especially undesirable if the child's seat is in use.

Another disadvantage with such designs is that the side mounted bag is often possessed of mounting means for actually attaching the bag to the carrier. In many cases, such mounting means are quite large and remain attached to the bag after the bag has been removed from the carrier, In such cases, the external appearance of the carrier bag is rather spoilt by such attachment means, and often the user of the carrier bag will tend to leave this attached to the carrier, as they do not wish to carry such an unstylish bag around. This is also inconvenient, as it will tend to mean that a second bag may be required for transferring carried items into when leaving the bike, and also the user is inconvenienced by having to transfer such items.

The present disclosure has been formulated in order to provide a bike carrier system in which the above problems and disadvantages with the prior known systems, are overcome. In particular, the disclosure relates to a means of removably mounting a carrier bag to a cycle carrier, without the necessity of removing a child's seat should this be attached. Further, this is done without the necessity of additional tools and whilst allowing the carrier bag to maintain a sufficiently large size in order to be of use. Further, the present disclosure relates to the matching bag in which the attachment means to the carrier are made as small and unobtrusive as possible, so as to allow the carrier bag to be used as a normal bag without embarrassment. Also, the disclosure is directed to a system comprising both a carrier and a bag, wherein only small and unobtrusive connection means are present on the bad, with most of the connecting portion existing on the carrier.

### Summary of the Invention

The above problems are solved by means of the bag adapter plate according to independent claim 1, as well as the carrier bag according to independent claim 7. In each of these cases, the dependent claims there-from highlight additional preferred embodiments.

The claimed invention can be better understood in view of the embodiments of the carrier and bag described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.* This also holds for the subsequent "Brief Description of the Drawings" as well as the "Detailed Description of the Preferred Embodiments."

In particular, the present disclosure relates to a plate which is intended to be attached to a section of a bike carrier. The adaption plate may be removably attached or attachable to the bike carrier by means of brackets comprising screws or nuts and bolts, as is well known in the art. Additionally, it is also possible to integrate the plate as part of the bike carrier. This adaption plate is generally structured as a plate-like member which extends in a first direction between a forward and rearward end of the plate. In this situation, the forward and rearward ends of the plate are defined with respect to the bike to which the plate is attached, and coincide with the front and back of the bike. Whilst an elongate plate-like member is advantageous with regard to the size of the adaption plate, it is clear that the plate can in fact be any particular shape desired, in order to be attachable or part of the bike carrier.

The adaptor plate is further provided with a first slot which comprises a front and rear end, coinciding with the forward and rearward ends of the plate respectively. This slot extends in generally the same direction as the first direction defined between the forward and rearward end of the adaptor plate. In particular, this first slot is adapted such that it can receive a first attachment means of a carrier bag to be attached to the plate. As will be discussed below, a variety of different attachment means can be incorporated onto a carrier bag, and consequently the first slot is so structured. By having the first slot extending in this manner, the ease of attaching the carrier bag to the bike carrier is improved. That is, the first slot allows the carrier bag to be attached to the adaptor plate at one end, notably the rear end, of the slot, and then the bag can be slid along the first slot in order to hold the bag to the carrier plate and carrier. Clearly, structuring the adaptor plate in this way, allows for the bag to be integrated with the slot in a location which does not overlap with the foot rests of the child's seat, and then the bag can be slid forwards under the child's seat and interposition with the foot rest overlapping a portion of the bag. This design and technique can clearly be achieved without having to remove the child's seat from the carrier.

It is also possible to provide the adaptor plate with a holding portion or section, which is intended to receive a second attachment means of the carrier bag. In this case, the holding portion could be separate from the first slot, to provide a second stand-alone holding portion. Further, it is advantageous if this holding portion is provided in a location which lies between the rear end of the first slot and the rearward end of the adaptor plate. That is, when attached to the bike the second holding portion is in a position which is generally further back than the first slot. The holding portion is useful for restricting the sliding motion of the carrier bag when the bag is attached to the first slot, thus stopping the accidental release of the carrier bag from the adaptor plate.

One possible design for the holding portion is that of a second slot. In particular, this second slot could extend in a direction which differs from that of the first slot, such that when the second attachment means of the carrier are engaged in the second slot, the carrier bag cannot slide backwards. This stops the accidental disengaging of the first attachment means from the first slot.

A further advantageous design of the holding portion, is that of a second slot which extends generally from an upper portion to a lower portion of the adaptor plate. Again, the upper and lower portions of the adaptor plates are defined in the orientation the adaptor plate would assume when attached to a bike carrier. A preferable direction for the second slot is from a position towards the upper side of the adaptor plate toward the lower side, and generally perpendicular to the first direction for the first slot.

It is possible to provide the first and second slots as being closed at both ends, rather than open at one end, or both ends. In this case, the slots are in fact elongate holes provided through the plate-like member making up the adaptor plate. In particular, the holes are fully contained within the plate-like member, and do not extends to the edge of the adaptor plate to provide an opening in the side of this plate. Rather, the first and second slots are fully self-contained holes surrounded by sections of the plate-like member making up the bag adaptor plate.

A particular design for the first slot, and also possibly the second slot, is to have one end provided with a wider section which leads into an elongate section with a narrower width. In particular, the first slot can have a wider section towards the rear of the slot, so as to allow the first attachment means of the carrier bag to pass there-through. Sliding the first attachment means towards the front of the slot engages this with a narrower section of the slot, thus stopping the disengagement of the attachment means from the adaptor plate. If the second slot is provided with a wider section at its upper side or end: when the second attachment means are attached therewith, again by passing part of the means through this wider section through to the back side of the adaptor plate, sliding the bag downward leads to engagement of the second attachment means, and thus the carrier bag is properly held on the adaptor plate.

As is clear from this description, the intention is that the carrier bag begins by engaging the first attachment means with the wider section of the first slot, and then the carrier bag is slid forward whilst maintaining the engagement between the first attachment means and the first slot. Once this has reached the front end of the first slot, it is possible to engage the second attachment means with the second slot and thus hold the carrier bag in place with the adaptor plate.

The carrier bag of the present disclosure is structured to readily attach to a bag carrier. In particular, but not exclusively, the carrier bag is intended and designed to interact with the bag adaptor plate as described above. In order to facilitate the attachment of the carrier bag, it is provided with a first and second attachment means.

One possible structure for the first and second attachment means are mushroom connectors, or similar sorts of connectors, such as buttons. Such mushroom connectors are characterised by a generally small shape, often a round head is used although obviously any desired shape can be chosen, which is attached to the carrier bag by means of a narrower shaft type portion. As can be understood from this connector, it is possible to pass the plate-like head region through to the other side of a wider section of a slot provided in a bike carrier, and then sliding of the carrier bag will lead to the mushroom connector being held in a narrower slot section of the slot on the carrier or adaptor plate.

Instead of the mushroom connector, button or the like, it is also possible to provide the first attachment means as a flexible strip which extends along a section of the carrier bag. In particular, this flexible strip has a T-shaped cross sectional profile. In particular, the upper cross portion of the T is positioned away from the carrier bag, and acts in the same way as the wider plate-like section of the button connectors described above. That is, the first part of the flexible strip is passed through to the second side or back side of a plate or the like on a bike carrier, and then with sliding of the carrier bag this thicker section passes to a narrower section of the hole or slot in the carrier. In such a position, it is not possible to pull the flexible strip out of the engagement with the plate in any other direction than that of the sliding direction. This clearly leads to attachment of the carrier bag with the bike carrier.

A further advantageous feature of the carrier bag is to provide a cover or flap which can hide the attachment means. Whether the attachment means are a mushroom connector or the elongate strip, a flap or pouch-type cover can be used to hide the attachment means when they are not being used for attaching the bag to the bike carrier. This obviously improves the outward appearance of the carrier bag when not attached to the carrier.

Another possible technique for hiding the attachment means, is to make these reversibly concealable within the interior of the bag. If the connection between the attachment means and the bag were made of a resilient plastic or rubber-type material, it could be possible to have a bi-stable configuration. That is, the first configuration would be holding the mushroom connectors, elongate strip or the like, outside of the bag in order to allow engagement with the bike carrier. By pushing the connecting portion, be this the mushroom connector or the like, inward into the interior of the bag, a slot provided in the resilient plastic or rubber would allow this to pass into the interior of the bag. With the resiliency of the plastic region, this could then lead to the slot being held shut, so as to completely hide the attachment means within the bag, and improve the outward appearance thereof.

The carrier bag may also be provided with a rigid shell, wherein the front top corner is made of a flexible material. This would allow the carrier bag to be attached to the cycle carrier when the child's seat is in position, whilst also providing a rigid outer shell to protect the contents of the bag. Further, when the bag is being used separate from the bike carrier, it is possible then to maximise the interior volume thereof.

Finally, it is conceived that a carrier system comprising the adaptor plate and carrier bag as defined above could be produced. As has been seen above, this allows for a system in which a carrier plate can be integral with, or attachable to, a bike carrier, to allow the forward sliding engagement of a carrier bag thereto. By allowing this forward sliding engagement, the carrier bag can be attached to the carrier even when a child's seat is in position and would typically interfere with the attachment of the bag in prior known systems.

### Brief Description of the Drawings

- Figure 1:: Side view of a bike in which a bike carrier and attached carrier bag can be seen.
- Figure 2:: System of figure 1 also incorporating a child's seat, showing overlap with bag and foot rest.
- Figure 3:: System of figures 1 and 2 without carrier bag showing adaptor plate of the present disclosure.
- Figure 4:: Front and top views of a bag adaptor plate.
- Figure 5:: Mushroom connector as attachment means between carrier bag and adaptor plate.
- Figure 6: flap.: Carrier bag showing location of butting connectors with covering

### Detailed Description of the preferred Embodiments

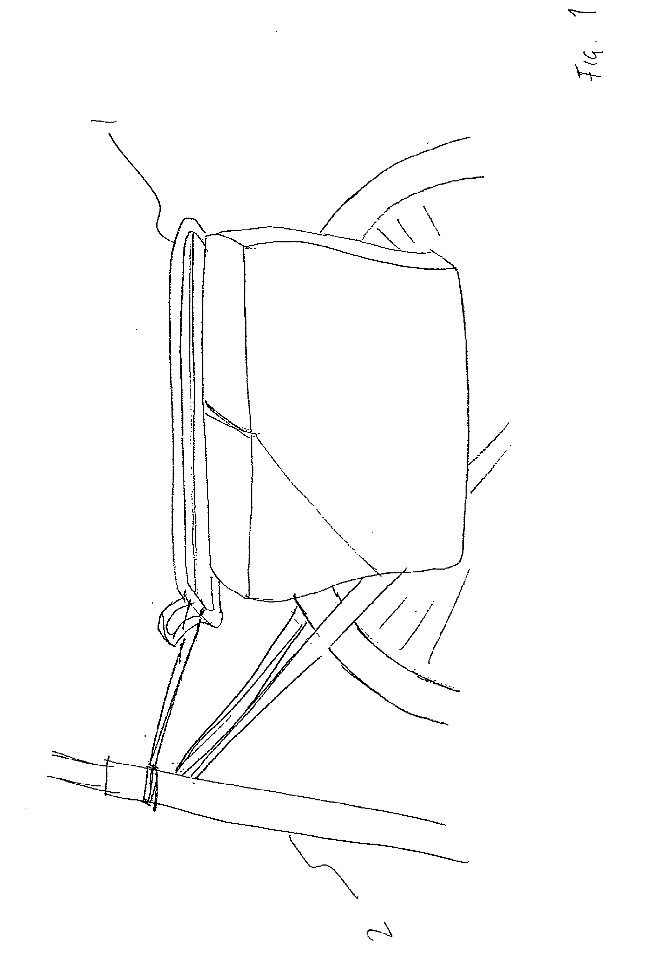

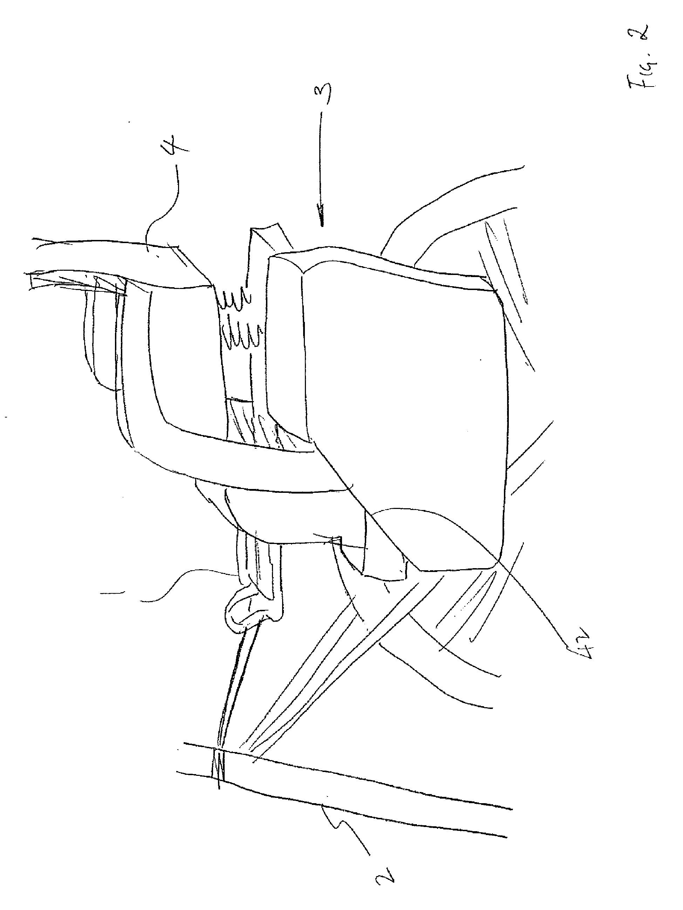

Figure 1 shows a side view of a bike 2 upon which is attached a bike carrier 1, as known in the art. As can be seen in this figure, the bike carrier 1 is attached to the frame of the bike 2 in any appropriate manner, and the bike carrier 1 provides an appropriate mounting place for a carrier bag 30. Standard carrier bags 30 are also well known in the art, and are a useful means of carrying items whilst on a bike 2. As can be seen in figure 2, if the bike carrier 1 will also to be provided with a child's seat 4, it is not uncommon for the foot rests of the child's seat 4 to overlap with the carrier bag 30. The carrier bag 30 shown in the figures is a known design, see for example EP 1 712 457, and is possessed of a collapsible corner 42 in order to accommodate the foot rest of the child's seat 4.

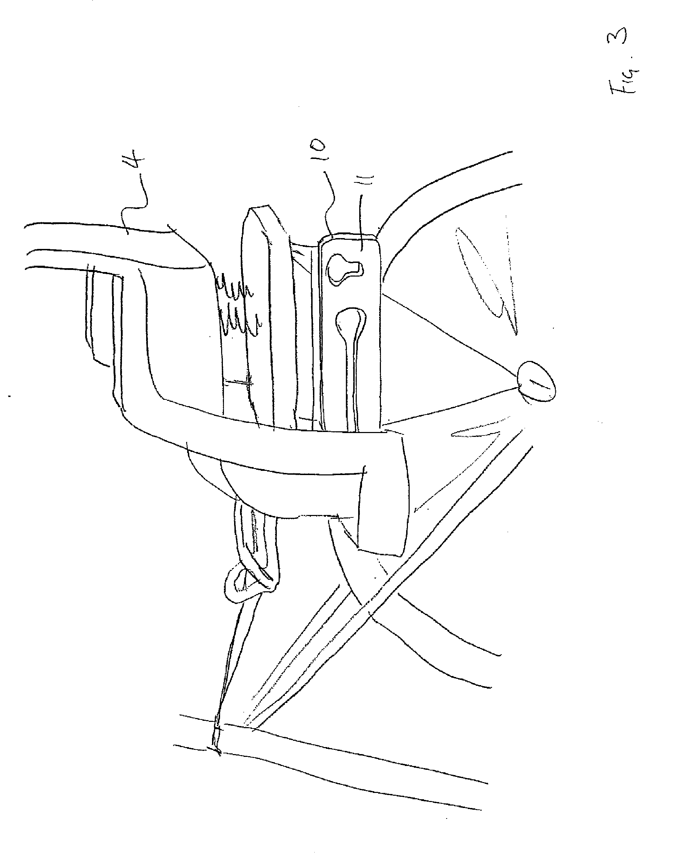

As has been discussed above, problems exist when attempting to mount the carrier bag 30 to the bike carrier 1 when the child's seat 4 is in position. In general, the foot rests of the child's seat 4 are positioned in the way of the attachment between the carrier bag 30 and the bike carrier 1. Looking at figure 3, the bag adaptor plate 10 of the present disclosure is shown attached to the bike carrier 1, and it is clear that the foot rest from the child's seat overlaps with this adaptor plate 10. In prior known designs, it is necessary to either use only a child's seat 4 attached to the carrier 1 or the carrier bag 30 attached to the carrier 1, but not both. Certain other designs utilising a collapsible corner 42 in a carrier bag 30 will allow the dual use of the carrier bag 30 and child's seat 4, but difficulties arise in attaching both items together. In particular, it has been necessary to remove the child's seat 4 from the bike carrier 1 in order to attach the carrier bag 30.

In the present disclosure, the system 3 overcomes the drawbacks of the prior art techniques by allowing the carrier bag 30 to be mounted to the bike carrier 1, even if a child's seat 4 is attached thereto. The system generally operates by specifically mounting the carrier bag 30 in a sliding manner from the rear side of the bike 2 toward the front of the bike 2. In this way, it is quite clear that the carrier bag 30 can be aligned with the bike carrier 1 and will slidably attach to the bike carrier 1, whilst being positionable around the foot rests of the child's seat 4. In particular, the carrier bag 30 will have appropriate attachment means 31, 32 which can be engaged with the bike carrier 1, as the carrier bag 30 slides from the rear of the bike 2 towards the front thereof. The side of the carrier bag 30 which will lie next to the bike carrier 1 may be appropriately provided with a rigid construction, such that it can slide between the foot rest and the bike carrier 1. The collapsible corner 42 allows the foot rest into the appropriate corner of the carrier bag 30, in order to mount carrier bag 30 to the bike carrier 1. As is clear from the above discussion, the carrier bag 30 can thus be mounted to the bike carrier 1, without removal of an attached child's seat 4.

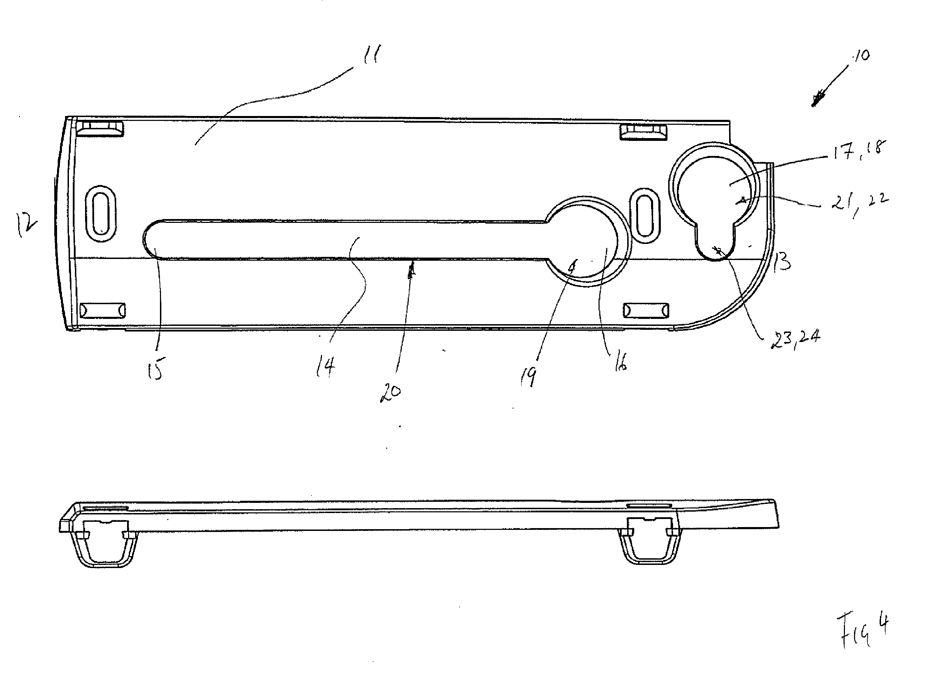

The particular design of the attachment means between the carrier bag 30 and the bike carrier 1, can be seen in figures 3 and 4. In these figures, a bag adaptor plate 10 is shown, and in figure 3 this is attached to the bike carrier 1. Whilst in the images it is clear that the bike adaptor plate 10 may be attached, or attachable, to the bike carrier 1, it is also possible to design a bike carrier 1 with an integral bike adaptor plate 10. If the bike adaptor plate 10 is a separate item, this can be attached in any known mechanism to the bike carrier 1, to give a semi-permanent attachment. For example, the use of brackets, nuts and bolts could readily lead to attachment of bag adaptor plate 10 to any design of bike carrier 1. The particular attachment between the bag adaptor plate 10 and bike carrier 1 is not crucial, as long as a stable and reliable connection is made.

As can be seen in figure 4, the bag adaptor plate 10 is designed as a plate-like member 11. The system shown in figure 4 is for the plate-like member 11 to be generally rectangular or elongate. This is a preferred design, as this means that the bag adaptor plate 10 will have a small footprint when attached to the bike carrier 1. Of course, the exact shape and size of the adaptor plate 10 can vary as required, and the specific shape shown in the figures is merely one of a variety of options.

As has been discussed above, the concept of the present disclosure is for the carrier bag 30 to attach by means of the bag adaptor plate 10 to the bike carrier 1. In particular, the carrier bag 30 advantageously attaches by sliding from the rearward end 13 toward the forward end 12 of the bag adaptor plate 10. These are chosen to coincide with the back and front of the bike 2, respectively. In order to allow the attachment of the carrier bag 30 to the bag adaptor plate 10 in a slideable manner, the bag adaptor 10 is provided with a first slot 14. This first slot 14 progresses in a first direction, which is advantageously chosen to be from the rearward 13 to the forward 12 end of the bag adaptor plate 10, That is, the first direction also coincides with the rear to front direction of the bike 2. As is clear, providing the first slot 14 in the bag adaptor plate 10 provides a fixing point to which a first attachment means 31 of a carrier bag 30 can be attached. By providing a suitably sized and shaped attachment means 31, this can be integrated with the first slot 14 and slid from rear end 16 of the slot 14 towards the front end 15. Again, the rear 16 and front 15 of the slot 14 coincide with the rearward 13 and forward 12 ends of the adaptor plate 10.

The particular design of the slot 14 shown in figure 4 is merely one of many. Whilst this may be a preferred design, it is not the only choice for such a first slot 14. For example, the first slot 14 could be provided as a rail-type slot, in which an appropriately shaped attachment means threads from an open end behind a plate with a gap therein, such that the carrier bag 30 is attached thereto. This would lead to the attachment means 31 being held behind the plate, with an appropriate section passing through the gap to the carrier bag 30.

In order to avoid the carrier bag 30 from accidentally disconnecting from the adaptor plate 10, a holding portion 17 may also be provided. The holding portion 17 is intended to engage with a second attachment means 32 provided on the carrier bag 30. This holding portion 17 can have a variety designs, and is intended to be engaged after the first attachment means 31 is within slot 14. That is, the carrier bag 30 is attached to the adaptor plate 10 by means of the first attachment means 31 interacting with first slot 14. As the carrier bag 30 is slid forward with the first attachment means 31 sliding through first slot 14, the second attachment means 32 moves closer to the holding portion 17. Once the first attachment means 31 are near, or at, the front end 15 of the first slot 14, the carrier bag 30 is nearly completely attached to the bike carrier 1 in its final resting position. At this point, aligning the second attachment means 32 with an appropriate holding portion 17, means that a second attachment between the carrier bag 30 and the adaptor plate 10 can be made.

The form of the second attachment means 32 and holding portion 17 can vary greatly, and that shown in figure 4 is again one of a variety of options. The particular example shown in figure 4 is to provide a second slot 18 which extends in a second direction different from the first direction. In the particular example shown in figure 4, the first direction is generally horizontal with the front to back direction of the bike 2, with the second direction being generally vertical from the top to bottom of the bike 2. Such a design is one of a variety of options, although this is a simple and preferred option. For example, the second attachment means 32 could be a press stud which interacts with the appropriate second half as the holding portion 17. Additionally, the holding portion 17 need not be second slot 18, but could be a clip which interacts with an appropriate section of the carrier bag 30, acting as the second attachment means 32.

A simple and preferred design for both the first slot 14 and second slot 18, acting as holding portion 17, is as shown in figure 4. In this particular example, the first and second slots 14, 18 are provided with wider openings 19, 21 at one end thereof. For the first slot 14 the wider section 19 is provided at the rear end 16 of the slot 14. In the case of the second slot 18, the wider section 21 is provided at the upper end 22 of the second slot 18. As will be appreciated by these designs, a first attachment means 31 can pass through the wider section 19 of the first slot 14, and then with forward sliding of the carrier bag 30 can pass to a narrower section 20 of the first slot 14. Careful design of the first attachment means 31 will allow the carrier bag 30 to slide in this manner, but the first attachment means 31 will then be held in the narrow section 20 of the first slot 14. The same is true of the second slot 18 and the second attachment means 32. That is, the second attachment means 32 could pass through the wider section 21 of the second slot 18 and then slide toward a narrower section 23 at the lower end 24 of the slot 18.

As can be seen and appreciated from the design of figure 4, the bag may be attached by means of the first attachment means 31 through first slot 14. Upon sliding the carrier bag 30 forward, the first attachment means 31 is held by the narrow section 20 of the first slot 14, but allows the forward sliding of the carrier bag 30 into its desired holding position. After sliding the carrier bag 30 forward, the second attachment means 32 aligns with the holding portion 17, in the design shown the second slot 18, and can thus interact therewith. In the design shown in figure 4, the second attachment means 32 passes through the wider section 21 of the second slot 18 and slides downward to the lower end 24 of the second slot 18 and into the narrow section 32. In both situations, the first and second attachment means 31, 32 are now held in the first and second slots 14, 18. This means that the carrier bag 30 cannot accidentally slide backwards whilst the bike 2 is in motion, as the second attachment means 32 interacting, and being engaged, with the holding portion 17 stops such motion.

As can be seen in the design of figure 4, the first and second slots 14, 18 are both provided as holes through the plate-like member 11. These holes pass from one side to the other of the plate-like member 11, in order to define the slots 14, 18. In particular, the two slots 14, 18 are completely held within the plate-like member 11 and are consequently closed at both ends. That is, the slots 14, 18 are not open at one end, rather the attachment means 31, 32 must pass through the plane of the plate-like member 11 from one side to the other, prior to sliding in order to fix the carrier bag 30 to the adaptor plate 10.

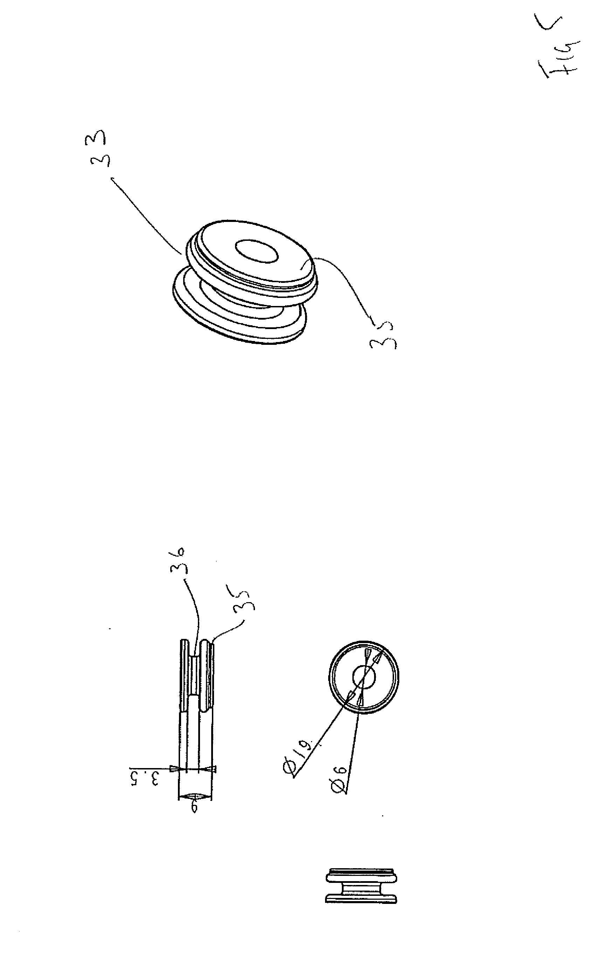

Looking at figure 5, one design for the first and second attachment means 31, 32 is provided. The attachment means of figure 5 are so called mushroom connectors 33, on account of their similarity to a mushroom. Such connectors are provided with a first large diameter section 35 which is for positioning away from the side surface of the carrier bag 30, and is attached to the carrier bag 30 by means of a narrow shaft region 36. As can be seen by this design, the larger diameter section 35 will readily pass through the wider sections 19, 21 of the first and second slots 14, 18. After passing through the wider sections 19, 21, the carrier bag 30 can be slid in the appropriate direction and the narrow shaft region 36 will pass through the narrower sections 20, 23 of the first and second slots 14, 18. Obviously, in such an orientation the large diameter section 35 will not pass through the narrow sections 20, 23 of the slots 14, 18, and thus will appropriately hold the carrier bag 30 to the adaptor plate 10. In figure 5 certain sizes are shown for the mushroom connector 33, although this is purely for example only. The mushroom connector 33 could be of a very different size, as required. Additionally, whilst the mushroom connectors 33 are shown with a circular profile, this is also by way of example. Any shape could be used for the mushroom connector 33, such that it will appropriately match with wider sections 19, 21 of the slots 14, 18.

Instead of providing specific mushroom connectors 33, it would be possible to provide the first and second attachment means 31, 32 by buttons 34. In the case of buttons 34, the button would be chosen of such a size such that it would pass through the wider sections 19, 21 of the slots 14, 18, but not the narrower sections 20, 23 thereof.

A further design, which is not shown in any of the figures, would be to provide the first attachment means 31 as a flexible strip. The strip could be provided with a T-shaped profile, wherein the cross section is positioned away from the side of the carrier bag 30, and the trunk section is attached at its base to the carrier bag 30. In this situation, the front part of the flexible strip could be passed through the wider section 19 of first slot 14, through to the second side of the adaptor plate 10. With sliding of the carrier bag 30 from the rearward end 13 to the forward end 12 of the adaptor plate 10, more of the flexible strip would be held in the first slot 14. By choosing the cross section of the T profile with a larger enough width, this would be stopped from passing through the narrow section 20 of the first slot 14. Again, a second attachment means 32 could be provided on the carrier bag 30 in order to interact with a holding section 17 in order to avoid accidental disengagement of the carrier bag 30. Alternatively, if the T-shaped strip were to be formed from a generally rigid and resilient material, this could be designed to hold the rear end of the strip within the wider section 19 when in normal use, so as to avoid the accidental disengagement of the carrier bag 30 from the adapter plate 10. This design also clearly provides the function of allowing the carrier bag 30 to be attached in a sliding manner from the rearward 13 to forward 12 end of the adaptor plate 10, so as to allow the carrier bag 30 to be attached to the bike carrier 1 when a child's seat 4 is in position.

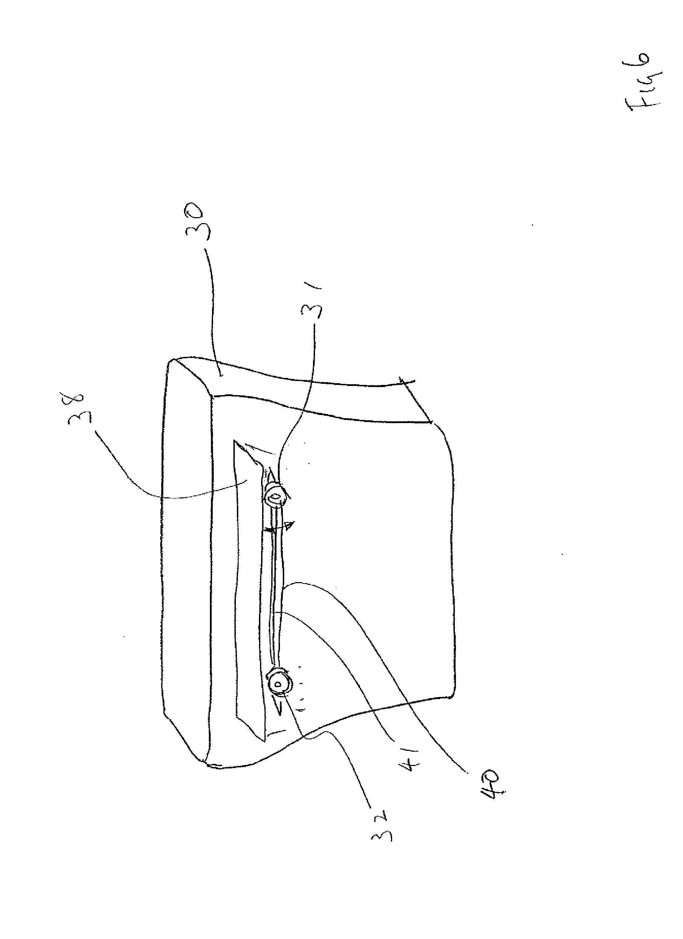

As can be seen in figure 6, a carrier bag 30 is shown comprising the mushroom connectors 33 of figure 5. Obviously, if the flexible strip were to be used, at least one of the mushroom connectors 33 would be replaced by such a design. As can be seen in figure 6, the carrier bag 30 is provided with the first and second attachment means 31, 32 at an appropriate distance from each other in order to engage with the adaptor plate 10.

As can also be seen in figure 6, it is possible to provide the carrier bag 30 with a flap 38, such that this will hide the first and second attachment means 31, 32 when the carrier bag 30 is not attached to the bike carrier 1. As was discussed above, prior art designs often incorporate bulky and unsightly attachment means, thus meaning that users of the bags do not wish to carry these around their destination. By hiding the first and second attachment means 31, 32 underneath the flap 38, the carrier bag 30 takes on a far nicer outward appearance. The flap 38 could, for example, be attachable by means of Velcro® in order to properly cover the attachment means 31, 32. Additionally, the flap 38 could be made into a pouch-type covering, which is attached more at the sides of the flap 38, which would allow access to the attachment means 31, 32 for attachment to the bike carrier 1, but would then naturally re-cover the attachment means 31, 32 when the carrier bag 30 was not attached to the carrier 1. Further, the attachment means 31, 32 could be held within a zipped pouch, such that when they are not in use, they can be held within the pouch inside the carrier bag 30, and out of sight.

It would also be possible to attach the first and second attachment means to the carrier bag 30 with some sort of reversible means 39. That is, such that the first and second attachment means 31, 32 could be positioned either outside of the carrier bag 30 for engagement with the bike carrier 1, or adaptor plate 10, and also can be pushed within the interior of the carrier bag 30. If the mushroom connectors 33 were to be used, the shaft region 36 could be provided by a flexible material which would allow the large diameter section 35 to be pushed within the interior of the bag, and the shaft region 36 would then re-close on the outside of the carrier bag 30 and hide the mushroom connectors 33. This could also be achieved if the mushroom connectors 33 were completely reversible, and could be pushed within the interior of the carrier bag.

Additionally, if the connection means were attached to the carrier bag by a plastic portion 40, provided by rigid plastic, this plastic portion 40 could also be used to allow the attachment means 31, 32 to be either inside or outside the carrier bag 30. For example, if the plastic portion 40 was provided with a slit 41, the attachment means 31, 32 could be passed through the slit 31 into the inside of the carrier bag 30. Further, if the plastic portion 40 were provided with a semi rigid structure, it could be structure such that the slit 41 was preferably in a closed orientation. This would then mean that the attachment means 31, 32 would be properly covered by the reversible plastic portion 40 and the slit 41 will be held in a closed position. Any known technique for allowing the connectors to pass from the outside to the inside of the carrier bag 30 would be appropriate in such a design.

It is clear that the above description presents both a carrier bag 30 as well as an adaptor plate 10. These two can be appropriately designed such that the match each other, or the carrier bag 30 could be structured to attach to a different sort of bike carrier 1. One choice aspect of the carrier bag 30 is that the attachment means to the bike carrier bag 1 can readily be obscured or hidden, to provide a more attractive looking carrier bag 30. This is achieved by means of the mushroom connector 33 option, which would obviously interface with the adaptor plate shown in figure 4. Whilst the above carrier bag 30 and adaptor plate 10 have been described together, it is clear that these form two separate sections of a general system 3. This general system 3 comprises both elements of the carrier bag 30 and plate 10, although each individual section can be independent.

Any combination of features which has been described above is not intended in any way to limit the design of the features being described. No intended specific combination of aspects for either the adaptor plate 10 or carrier bag 30 should be derived from the above description, and indeed all aspects should be considered as optional and interchangeable as appropriate for defining the adaptor plate 10 and carrier bag 30, and indeed the carrier system 3.

## Claims

1. A bag adapter plate (10) for attachment to or forming part of a bike carrier (1) of a bike (2), wherein the adapter plate (10) comprises:
a plate like member (11) extending in a first direction between a forward (12) and rearward (13) ends of the adapter plate (10), as defined when the adapter plate (10) is attached to the bike carrier (1);
a first slot (14) extending along the first direction and having a front end (15) and a rear end (16) as defined when the adapter plate (10) is attached to the bike carrier (1), the first slot (14) for receiving a first attachment means (31) of a carrier bag (30);
a holding portion (17) for receiving a second attachment means (32) of the carrier bag (30), the holding portion (17) being separate from the first slot (14) and positioned at a location which is between the rear end (16) of the first slot (14) and the rearward end (13) of the plate (10), such that when the carrier bag (30) is attached to the bag adapter plate (10) the interaction between the second attachment means (32) and the holding portion (17) stops the first attachment means (31) from disengaging the first slot (14).

2. The bag adapter plate (10) of claim 1, wherein the holding portion (17) is formed as a second slot (18) which extends in a second direction which is different from that of the first slot (14).

3. The bag adapter plate (10) of either one of the preceding claims, in particular claim 2, wherein the holding portion (17) is a second slot (18) which extends generally from an upper portion of the bag adapter plate (10) to a lower portion of the bag adapter plate (10), as defined when the bag adapter plate (10) is attached to a bike (2).

4. The bag adapter plate (10) of any one of the preceding claims, in particular of claims 2 and 3, wherein the first (14) and second slots (18), where present, are formed as elongate holes in the bag adapter plate (10) which are closed at both ends and do not extend to the edge of the bag adapter plate (10).

5. The bag adapter plate (10) of any one of the preceding claims, wherein the first slot (14) is provided with a wider section (19) at its rear end (16) with a narrower section (20) extending from this wider section (19) to the front end (15).

6. The bag adapter plate (10) of any one of the preceding claims, in particular any one of claims 2 to 5, wherein the second slot (18), when present, is provided with a wider section (21) at its upper end (22) with a narrower section (23) extending from this wider section (21) to the lower end (24).

7. A carrier bag (30) for interaction with a bag adapter plate (10), in particular a bag adapter plate (10) as defined in any one of claims 1 to 6, wherein the carrier bag (30) is comprised of a first (31) and preferably a second (32) attachment means.

8. The carrier bag (30) according to claim 7, wherein the first (31) and second (32) attachment means are provided by mushroom connectors (33) or buttons (34), wherein the mushroom connectors (33) are possessed of a large diameter plate-like section (35) at an outer side thereof, and a narrower shaft region (36) for locating next to the carrier bag (30).

9. The carrier bag (30) according to either of claims 7 or 8, in particular to claim 7, wherein the first attachment means (31) is provided with a flexible strip (37) extending along a width of the carrier bag (30), wherein the flexible strip (37) has a T-shaped profile, wherein the cross portion of the T is positioned on the side away from the carrier bag (30), and if present the second attachment means (32) could be provided by a mushroom connector (33).

10. The carrier bag (30) according to any one of claims 7 to 9, wherein the carrier bag (30) comprises a flap (38) which is positioned to cover first (31) and second (32) attachment means when these are not being used to attach the carrier bag (30) to a bag adapter plate (10).

11. The carrier bag (30) according to any one of claim 7 to 10, wherein the first (31) and second (32) attachment means are positioned on the outside of the carrier bag (30) with reversing means (39) which allow the attachment means (31, 32) to be pushed within the inside of the carrier bag (30) so that they are hidden.

12. The carrier bag (30) according to any one of claims 7 to 11, in particular claim 11, wherein the reversing means (39) are provided by a reversible plastic portion (40) which forms part of the outer surface of the carrier bag (30), the reversible plastic portion (40) comprising a slit (41) which allows the attachment means (31, 32) to pass through from the inner to the outer side of the carrier bag (30), or vice versa, wherein
the reversible plastic portion (40) is so structured that it tends to exert a force to hold the slit (41) in a closed position to either keep the attachment means (31, 32) on the outside of the carrier bag (30), or to keep the attachment means (31, 32) on the inside of the carrier bag (30), wherein when the attachment means (31, 32) are on the inside of the carrier bag (30) the reversible plastic portion (40) presents a closed slit (41) matching the outer look of the carrier bag (30).

13. The carrier bag (30) according to any one of claims 7 to 12, wherein the carrier bag (30) is provided with a collapsible front upper corner (42) to allow the positioning of a foot rest from a child's seat attached to a bike carrier to which the carrier bag (30) may be attached.

14. A carrier system (3) for a bike carrier (1) comprising a bag adapter plate (10) according to any one of claims 1 to 6 and a carrier bag (30) according to any one of claims 7 to 13.

15. A carrier system (3) for a bike carrier (1) comprising a bag adapter plate (10) and a carrier bag (30), wherein the system of attachment between the bag adapter plate (10) and the carrier bag (30) is primarily embodied on the bag adapter plate (10) with only minimal and unobtrusive aspects being present on the carrier bag (30).
